# EUROPEAN PATENT SPECIFICATION

(11) **EP 3 998 150 B1**
(45) Date of publication and mention of the grant of the patent: **06.03.2024**
(21) Application number: 20889393.3
(22) Date of filing: 27.08.2020
(51) Int. Cl.: B32B 37/10, B32B 38/18, B29C 63/02, B29L 31/34, G09F 9/30

(54) **CURVED SCREEN ATTACHING DEVICE**
BEFESTIGUNGSVORRICHTUNG FÜR EINEN GEBOGENEN BILDSCHIRM
DISPOSITIF DE FIXATION D'ÉCRAN INCURVÉ

(30) Priority: 20.11.2019 CN 201911142222
(43) Date of publication of application: 18.05.2022
(73) Proprietor: Yungu (Gu'an) Technology Co., Ltd., Langfang, Hebei 065500 (CN)
(72) Inventor: ZHANG, Qi, Kunshan, Jiangsu 215300 (CN); YANG, Shuo, Kunshan, Jiangsu 215300 (CN); YANG, Bin, Kunshan, Jiangsu 215300 (CN); YUAN, Yahong, Kunshan, Jiangsu 215300 (CN); GU, Chunxiao, Kunshan, Jiangsu 215300 (CN); WANG, Shanhe, Kunshan, Jiangsu 215300 (CN); PEI, Junqiang, Kunshan, Jiangsu 215300 (CN)
(74) Representative: Arnold & Siedsma
(86) International application number: PCT/CN2020/111807
(87) International publication number: WO 2021/098329

(56) References cited:
- CN-A- 106 585 045
- CN-A- 108 016 655
- CN-A- 110 861 290
- CN-U- 207 954 939
- CN-U- 209 216 462
- TW-A- 201 302 439

## Description

### TECHNICAL FIELD

The present disclosure relates to the field of display technologies and, in particular, to a laminating apparatus for a curved screen.

### BACKGROUND

With the development of display technology, users' display requirements for display screens are gradually diversified. In order to obtain a better visual experience, display screens will gradually develop towards curved surfaces. During a manufacturing process of a curved screen, a screen needs to be laminated on a cover plate. In the prior art, the screen is usually laminated on the cover plate by a laminating apparatus.

CN 207 954 939 U discloses a glass film laminating jig and a glass film laminating device relating to 3D glass processing technical field. The glass film laminating jig comprises a silica gel structural member, a bearing base and a cushion block. The bearing base is used to fix the silica gel structural member; the cushion block is arranged between the bearing base and the silica gel structural member to absorb the amount of deformation of the middle area.

CN 209 216 462 U discloses an elastic device and an attaching tool for attaching a screen assembly, which are used for attaching a flexible inner screen with an opening to the inner side of curved glass to form the screen assembly. The rigidity of the edge of the elastic body is increased, bubbles caused by insufficient strength in the process of laminating the flexible inner screen and the curved glass are avoided, and the laminating quality of the screen assembly is improved.

### SUMMARY

The present invention is set out in the appended set of claims. Embodiments of the present disclosure provide a laminating apparatus for a curved screen to solve a problem of a poor laminating effect between a screen and a cover plate in a curved screen.

In order to achieve the foregoing objective, embodiments of the present disclosure provide the following technical solutions.

An embodiment of the present disclosure, however not according to the invention as claimed, provides a laminating apparatus for a curved screen, including a base, an elastic component, a backing plate and a flexible pressing mold, wherein the backing plate is arranged above the base, the elastic component is connected to the backing plate, the flexible pressing mold covers the backing plate and has a curved surface curving away from the base, and adapted to a shape of the curved screen; and the base includes a main body and two side beams connected to two sides of the main body, the side beams are higher than the main body in a vertical direction, each of the side beams is provided with a groove and a supporting part along a length direction thereof, and two sides of the flexible pressing mold extend outward to cover the two supporting parts of the two side beams respectively and extend into the two grooves of the two side beams respectively.

The laminating apparatus for a curved screen provided by the embodiments of the present disclosure has the following advantages.

In the laminating apparatus for a curved screen provided by the embodiments of the present disclosure, a top of the flexible pressing mold is arranged as a curved surface adapted to the shape of the screen, which ensures uniformity of a pressure applied by the flexible pressing mold to the screen; an elastic connection between the backing plate and the base ensures that the flexible pressing mold is fully extended to increase a contacting area between the screen and the flexible pressing mold; an arrangement of the groove and the supporting part on each of the side beams enables edge portions of the flexible pressing mold to extend toward the screen, which increases a pressure applied by the edge portions of the flexible pressing mold to the screen, and makes the screen gradually laminated to a cover plate in a direction from middle to peripheral edges, thereby squeezing out a gas between the screen and the cover plate, reducing a possibility of black spots and bubbles being generated in the curved screen, and solving the problem of the poor laminating effect between the screen and the cover plate.

As an improvement of the laminating apparatus for a curved screen of an embodiment of the present disclosure, a first chamfer is provided at an edge of the supporting part adjacent to the groove and a second chamfer is provided at an edge of the supporting part adjacent to the main body.

In addition to the above-described technical problem solved by the present disclosure, technical features constituting the technical solutions, and the beneficial effects brought about by the technical features of these technical solutions, other technical problems that could be solved by the laminating apparatus for a curved screen provided by the embodiments of the present disclosure, other technical features included in the technical solutions and the beneficial effects brought about by these technical features will be further described in detail in the specific implementations.

### BRIEF DESCRIPTION OF DRAWINGS

FIG. 1 is an exploded view of a laminating apparatus for a curved screen provided according to an embodiment of the present disclosure;
FIG. 2 is a schematic structural diagram of a laminating apparatus for a curved screen provided according to an embodiment of the present disclosure;
FIG. 3 is a front view of the laminating apparatus for a curved screen of FIG. 2;
FIG. 4 is a cross-sectional view in a direction of B-B of FIG. 3;
FIG. 5 is a schematic structural diagram of a flexible pressing mold of FIG. 1;
FIG. 6 is a left view of the flexible pressing mold of FIG. 5; and
FIG. 7 is a schematic structural diagram of a base of FIG. 1.

### DESCRIPTION OF EMBODIMENTS

During a manufacturing process of a curved screen, a laminating apparatus is usually used to laminate the screen on a cover plate. During the lamination, because a pressure to a middle of the screen is greater than a pressure to edges of the screen when the laminating apparatus is in contact with the screen, the pressure to the edges of the screen cannot meet laminating requirements, that is, a laminating force between the curved screen and the cover plate is not uniform, which easily causes black spots, bubbles and other problems in the curved screen, thereby generating a poor lamination. Therefore, a problem of a poor lamination between the screen and the cover plate usually occurs in a display technology.

In view of the above-mentioned drawbacks, embodiments of the present disclosure provide an improved technical solution. In this technical solution, a laminating apparatus for a curved screen includes a base, an elastic component, a backing plate and a flexible pressing mold. A top of the flexible pressing mold is arranged as a curved surface adapted to a shape of a screen, which ensures uniformity of a pressure applied by the flexible pressing mold to the screen; an elastic connection between the backing plate and the base ensures that the flexible pressing mold is fully extended to increase a contacting area between the screen and the flexible pressing mold; an arrangement of groove and supporting part on each of the side beams enables edge portions of the flexible pressing mold to extend toward the screen, which increases a pressure applied by the edge portions of the flexible pressing mold to the screen, and makes the screen gradually laminated to a cover plate in a direction from middle to peripheral edges, thereby squeezing out a gas between the screen and the cover plate, reducing a possibility of black spots and bubbles being generated in the curved screen, and solving the problem of the poor laminating effect between the screen and the cover plate.

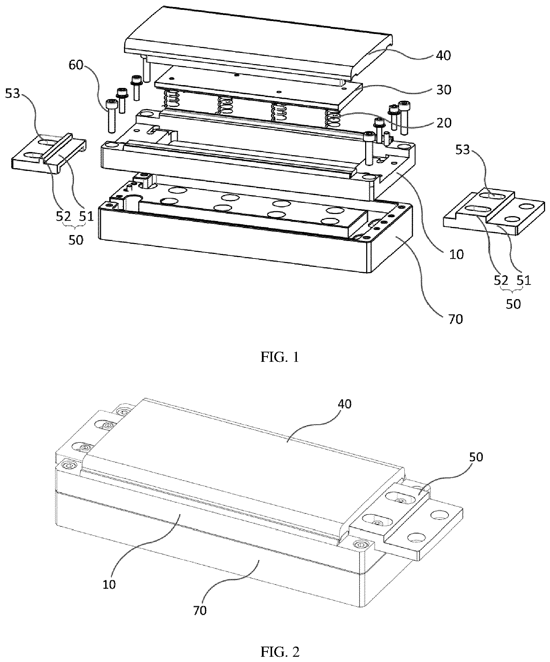

Reference is made in the following to FIGS.1-7. A laminating apparatus for a curved screen provided by an embodiment of the present disclosure includes a base 10, an elastic component 20, a backing plate 30 and a flexible pressing mold 40, wherein the backing plate 30 is arranged above the base 10, and one end of the elastic component 20 is connected to the backing plate 30 and the other end of the elastic component 20 is connected to the base 10. The flexible pressing mold 40 covers the backing plate 30, and a top of the flexible pressing mold 40 is arranged as a curved surface adapted to a shape of a screen. The base 10 includes a main body 11 and two side beams 12 connected to two sides of the main body 11. The side beams 12 are higher than the main body 11 in a vertical direction. Each of the side beams 12 is provided with a groove 13 and a supporting part 14 extending along a length direction thereof. Two sides of the flexible pressing mold 40 extend outward to cover the two supporting parts 14 of the two side beams 12 respectively and extend into the two grooves 13 of the two side beams 12 respectively.

The laminating apparatus for a curved screen provided in this embodiment is used for laminating the curved screen to a cover plate. Specifically, during a laminating process, the flexible pressing mold 40 of the laminating apparatus for a curved screen is in contact with the screen to drive the screen to be laminated to the cover plate. In the laminating apparatus for a curved screen provided in this embodiment, the flexible pressing mold 40 is used to directly contact with the screen.

In this embodiment, the flexible pressing mold 40 has characteristics of being soft, easy to deform and easy to extend. Specifically, a material of the flexible pressing mold 40 may be silicone, rubber, or TPE (Thermoplastic Elastomer), and may also be soft PVC (Polyvinyl chloride).

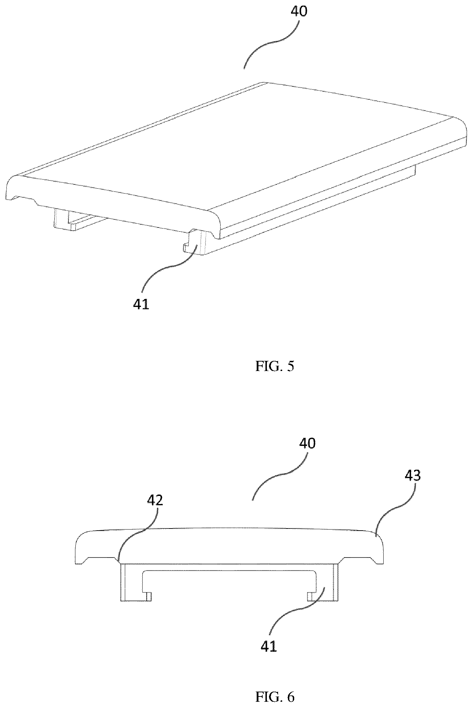

Since the curved screen is in a curved shape, the top of the flexible pressing mold 40 is used to fit the screen to be laminated. As shown in FIGS. 5 and 6, the top of the flexible pressing mold 40 in this embodiment is arranged as a curved surface adapted to the shape of the screen. Such an arrangement ensures the uniformity of the pressure applied by the flexible pressing mold 40 to the screen, which can reduce or avoid a possibility of the screen being broken due to a non-uniform pressure, and also improve a tightness of subsequent lamination.

As shown in FIGS 2, 3, and 4, the flexible pressing mold 40 covers the backing plate 30. Specifically, the flexible pressing mold 40 covers a top surface and at least two side surfaces of the backing plate 30, and since the flexible pressing mold 40 is easy to extend when a force is applied thereon, the arrangement of the flexible pressing mold 40 covering the backing plate 30 in this embodiment can increase a contacting area between the flexible pressing mold 40 and the screen to be laminated.

Further, the backing plate 30 and the base 10 are elastically connected by the elastic component 20, and the elastic component 20 may be specifically arranged as a plurality of springs, or may be arranged as an elastic rubber. The elastic component 20 provides an elastic force for the backing plate 30 and the flexible pressing mold 40 covering the backing plate 30 during the laminating process of the curved screen, which ensures that the flexible pressing mold 40 can be fully extended to increase the contacting area between the screen and the flexible pressing mold 40, thereby making the laminating force between the screen and the cover plate uniform; and at the same time, the elastic component 20 provides a cushion for the lamination, reducing the possibility of the screen being broken.

In addition, the laminating apparatus for a curved screen provided in this embodiment can further include a supporting platform 70 located below the base 10. It should be noted that being located below the base 10 in this embodiment refers to being located at a side of the base 10 facing away from the backing plate 30. The supporting platform 70 is used to place other components required for the laminating process, such as a light source. The above-mentioned elastic component 20 can also be arranged on the supporting platform 70. Specifically, in this embodiment, the main body 11 of the base 10 has an opening disposed in the middle thereof, and one end of the elastic component 20 is connected to the supporting platform 70 and the other end of the elastic component 20 is connected with the backing plate 30 through the opening of the main body 11 of the base 10.

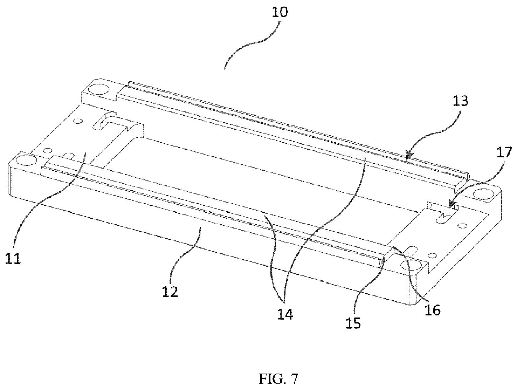

In this embodiment, the base 10 may be made of acrylic. As shown in FIGS. 1 and 7, the base 10 includes the main body 11 and the side beams 12 located on two sides of the main body 11. The side beams 12 are fixedly connected to the main body 11. Specifically, the side beams 12 and the main body 11 can be formed as an integrated structure. In the vertical direction, a top of the side beam 12 is higher than a top of the main body 11, and a bottom of the side beam 12 is flush with a bottom of the main body 11. The two side beams 12 are respectively located on two opposite sides of the main body 11. Further, in this embodiment, a bottom surface of the main body 11 is rectangular, the side beams 12 are arranged on two long sides of the main body 11, and a length of the side beam 12 is equal to a length of the rectangular main body 11.

On the basis of the above implementations, the groove 13 on the side beam 12 is arranged in a variety of ways. For example, the groove 13 may be arranged on the side beam 12 from a top surface of the side beam 12. As another example, as shown in FIG. 7, the side beam 12 includes a main portion and a protrusion, the protrusion has a width equal to a width of the main portion and a length less than a length of the main portion, and the groove 13 is extending downward from a top surface of the protrusion. This embodiment does not specifically limit the arrangement of the groove 13.

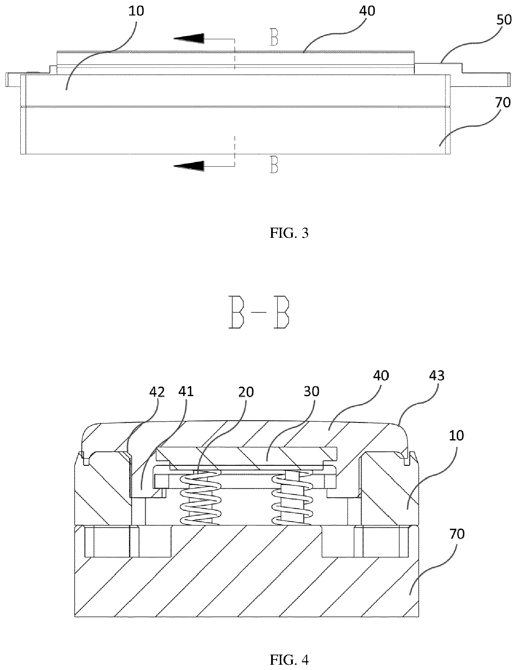

The side beam 12 is also provided with the supporting part 14 thereon. As shown in FIG. 7, a part of the side beam 12 between the groove 13 and the main body 11 forms the supporting part 14, and the supporting part 14 is used to support the flexible pressing mold 40. Specifically, as shown in FIG. 4, the flexible pressing mold 40 covers the backing plate 30, and two sides of the flexible pressing mold 40 which are adjacent to the side beams 12 respectively extend outwards to cover the tops of the supporting parts 14 of the two side beams 12, and the two sides of the flexible pressing mold 40 respectively extend downward to form protruding ends, and the protruding ends extend into the two grooves 13 of the two side beams 12 so that the flexible pressing mold 40 is locked to the side beams 12.

Taking the orientation shown in FIG. 1 as an example for description, when the laminating apparatus for a curved screen provided in this embodiment is in use, the laminating apparatus for a curved screen contacts with the screen and drives the screen to move toward the cover plate; a top of the screen firstly contacts with the cover plate, and the cover plate applies a downward pressure to the screen, that is, a downward pressure is applied to the flexible pressing mold 40. When the pressure applied to the flexible pressing mold 40 is equal to an elastic force applied to the backing plate 30 by the elastic component, edges of the flexible pressing mold 40 gradually extend toward a position where the screen is located when the edges of the flexible pressing mold 40 is squeezed by the supporting parts 14 of the side beams 12 of the base 10, thus, the flexible pressing mold 40 fully contacts with the screen, and the screen and the cover plate are gradually laminated with each other in a direction from the middle to the periphery.

In summary, in the laminating apparatus for a curved screen provided by the embodiments of the present disclosure, the top of the flexible pressing mold 40 is adapted to the screen, and the flexible pressing mold 40 covers the backing plate 30 and a part of the side beams 12 of the base 10; the elastic component 20 is arranged between the backing plate 30 and the base 10; and the base 10 is provided with the grooves 13 which are matched with two sides of the flexible pressing mold 40, so that the flexible pressing mold 40 can fully contact with the screen during the laminating process, and the screen is gradually laminated to the cover plate in the direction from the middle to the peripheral edges, thereby squeezing out the gas between the screen and the cover plate, reducing the possibility of black spots and bubbles being generated in the curved screen; and solving the problem of the poor laminating effect between the screen and the cover plate.

On the basis of the foregoing implementations, further, a first chamfer 15 is provided at an edge of the supporting part 14 adjacent to the groove 13 and a second chamfer 16 is provided at an edge of the supporting part 14 adjacent to the main body 11. As shown in FIG. 7, the supporting part 14 is located between the groove 13 and the main body 11. Since the side beam 12 is higher than the main body 11 in the vertical direction, the supporting part 14 has two edges, and one of the two edges is provided with the first chamfer 15 and the other one of the two edges is provided with the second chamfer 16. In this embodiment, the first chamfer 15 and the second chamfer 16 are in contact with the flexible pressing mold 40, respectively. The first chamfer 15 and the second chamfer 16 can apply an oblique upward thrust to the flexible pressing mold 40, so that the edges of the flexible pressing mold 40 are in full contact with the screen, and thus the edges of the screen and the cover plate are closely laminated with each other.

Correspondingly, as shown in FIGS. 4 and 6, a part of the flexible pressing mold 40 which contacts with the two edges of the supporting part 14 may also be provided with inner chamfers 42. Specifically, the inner chamfer 42 can be arranged to be 45° in order to increase a contacting area between the flexible pressing mold 40 and the first chamfer 15 and a contacting area between the flexible pressing mold 40 and the second chamfer 16.

On the basis of the above-mentioned implementations, preferably, the first chamfer 15 is arranged as a chamfer with a circular arc surface. As shown in FIG. 7, an edge of the supporting part 14 adjacent to the groove 13 is arranged as a chamfer with a circular arc surface, specifically, a radius of the circle where the circular arc surface is located is 2 mm. A contacting area between the circular arc surface of the chamfer and the flexible pressing mold 40 is large, which further allows the edges of the flexible pressing mold 40 to be in full contact with the screen from a plurality of different directions, thus improving the tightness of the lamination between the edges of the screen and the cover plate.

In a possible implementation, the second chamfer 16 is inclined at 30° or 45° or 60°. Preferably, it is easy to manufacture a chamfer of 45°. Specifically, the second chamfer 16 may be a chamfer of 1 mm.

In a possible implementation, each of two sides of the flexible pressing mold 40 located above the groove 13 is defined by an arc-shaped side 43. As shown in FIGS. 5 and 6, two sides of the flexible pressing mold 40 extend outward and extend into the grooves 13 of the side beams 12 of the base 10. The arrangement of the arc-shaped sides being located above the grooves 13 ensures that during the laminating process, the edges of the flexible pressing mold 40 gradually contacts with the screen from the middle to the peripheral edge, so that the screen and the cover plate are gradually laminated with each other, and the laminating accuracy is thus improved. Further, the arc-shaped side 43 in this embodiment may be defined by a radius-varied arc, that is, a plurality of arcs with different radii are connected to be the arc-shaped side 43, so as to adapt to a radius-varied edge of the cover plate.

In a possible implementation, the flexible pressing mold 40 is provided with a pair of extension parts 41 for covering two sides of the backing plate 30, and a bottom end of each of the extension parts 41 extends inward in a horizontal direction to contact with a bottom of the backing plate 30. As shown in FIGS. 4, 5 and 6, the extension parts 41 are arranged at a bottom of the flexible pressing mold 40 and extend toward the base 10. The extension parts 41 extend inward to cover the two sides of the backing plate 30, and the bottom ends of the extension parts 41 are in contact with the base 10 or are locked to the base 10. The arrangement of the extension parts 41 in this embodiment improves the stability of the covering of the flexible pressing mold 40.

In a possible implementation, the laminating apparatus for a curved screen provided in this embodiment further includes two blocks 50. The two blocks 50 are arranged between the two side beams 12 and are respectively abutting against two sides of the flexible pressing mold 40. As shown in FIGS. 2 and 3, the blocks 50 are arranged to clamp the flexible pressing mold 40. On the basis of the above implementations, the top of the flexible pressing mold 40 is arranged as a curved surface. When the flexible pressing mold 40 drives the screen to contact with the cover plate, a middle part of the flexible pressing mold 40 firstly contacts with the screen, and then an edge part of the flexible pressing mold 40 contacts with the screen. The blocks 50 can prevent the flexible pressing mold 40 from extending in the horizontal direction, so that the flexible pressing mold 40 extends toward the screen, thereby increasing the pressure applied to the screen by edge parts of the flexible pressing mold 40, and thus enabling more uniform laminating force between the screen and the cover plate.

In a possible implementation, the base 10 is provided with a plurality of clamping slots 17 for matching with the blocks 50. In this embodiment, the two blocks 50 are used to clamp two sides of the flexible pressing mold 40 to prevent the flexible pressing mold 40 from extending in the horizontal direction. The base 10 is provided with the clamping slots 17 and the blocks 50 are installed in the clamping slots 17. Specifically, the blocks 50 can be connected with the clamping slots 17 through bolts 60.

In a possible implementation, the block 50 includes a bottom plate 51 and a baffle plate 52, the bottom plate 51 is engaged with the clamping slots 17, and the baffle plate 52 abuts against the flexible pressing mold 40. Specifically, structures of the two blocks 50 may be the same or different. As shown in FIGS. 2 and 3, the block 50 includes the bottom plate 51 and the baffle plate 52 arranged perpendicular to the bottom plate 51. On the basis of the above implementations, the bottom plate 51 is engaged with the clamping slots 17 of the base 10, and the connection therebetween is achieved by connecting parts such as bolts 60 or screws; and an inner side of the baffle plate 52 is in contact with and abuts against a side surface of the flexible pressing mold 40.

Taking the orientation shown in FIG. 1 as an example for description, the block 50 on the left includes a bottom plate 51 and a baffle plate 52 connected to a top surface of the bottom plate 51 in a vertical direction, the bottom plate 51 has a pair of clamping strips extending downwards from two sides of a bottom surface of the bottom plate 51, and the clamping strips are received in the clamping slots 17 of the base 10, and the bottom plate 51 is provided with connecting holes 53 for the bolts 60 to pass through, the connecting holes 53 penetrate through the bottom plate 51; the block 50 on the right includes a bottom plate 51 and a baffle plate 52 connected to a top surface of the bottom plate 51 in a vertical direction, the bottom plate 51 is received in the clamping slots 17 of the base 10, and connecting holes 53 for the bolts 60 to pass through sequentially penetrate through the baffle plate 52 and the bottom plate 51 from a top surface of the baffle plate 52. The connecting hole 53 may be a threaded hole or a through hole, and correspondingly, the base 10 is provided with a corresponding through hole or threaded hole. In addition, a part of the bottom plate 51 located at a side of the baffle plate 52 is also provided with a connection hole for connecting a mounting board. The mounting board is used to support a FPC (flexible circuit board) in a curved display screen to prevent the FPC from sagging or bending during the laminating process.

The elastic component includes a plurality of springs 20. Specifically, an amount of the springs 20 may be eight. As shown in FIG. 1, the base 10 is provided with a plurality of holes for installing the springs 20, and top ends of the springs 20 are fixedly connected to the backing plate 30. In this embodiment, the eight springs 20 are connected to the bottom of the backing plate 30 in a rectangular array distribution. Specifically, an elastic force of each spring 20 may be arranged to be about 0.4N.

The flexible pressing mold 40 is arranged as a silicone pressing mold. In this embodiment, a friction coefficient of the flexible pressing mold 40 may be arranged to be 0.2 to 0.4. Specifically, the flexible pressing mold 40 is made of silica gel, and is coated with a PU (polyurethane). The silicone material is soft and easy to deform, which is beneficial for the flexible pressing mold 40 to fully contact with the screen without damaging the screen. The arrangement of the PU coating is beneficial to increasing a friction, improving the stability of the laminating apparatus for a curved screen during the laminating process, and preventing the non-uniform laminating force caused by slippage.

The embodiments or implementations in this specification are described in a progressive manner, each embodiment focuses on the differences from other embodiments, and the same or similar portions between the various embodiments can be referred to each other.

Finally, it should be noted that the above embodiments are only used to illustrate but not to limit the technical solutions of the present disclosure; although the present disclosure has been described in detail with reference to the foregoing embodiments, those of ordinary skill in the art should understand that the technical solutions recorded in the foregoing embodiments may still be modified, or some or all of the technical features may be equivalently replaced; and these modifications or replacements do not make the essence of the corresponding technical solutions deviate from the scope of the technical solutions of the embodiments of the present disclosure.

## Claims

1. A laminating apparatus for a curved screen, comprising a base (10), an elastic component, a backing plate (30) and a flexible pressing mold (40), wherein:
the backing plate (30) is arranged above the base (10), one end of the elastic component is connected to the backing plate (30), the flexible pressing mold (40) covers the backing plate (30), and the flexible pressing mold (40) has a curved surface curving away from the base (10), and adapted to a shape of the curved screen; and
the base (10) comprises a main body (11) and two side beams (12) connected to two sides of the main body (11), each of the side beams (12) is provided with a groove (13) and a supporting part (14) extending along a length direction thereof, and two sides of the flexible pressing mold (40) extend outward to cover the two supporting parts (14) of the two side beams (12) respectively and extend into the two grooves (13) of the two side beams (12) respectively;
wherein the laminating apparatus further comprises a supporting platform (70) located below the base (10), and the elastic component is arranged on the supporting platform (70); and
wherein the main body (11) of the base (10) has an opening disposed in the middle thereof, one end of the elastic component is connected to the supporting platform (70), and the other end of the elastic component is connected with the backing plate (30) through the opening of the main body (11) of the base (10).

2. The laminating apparatus according to claim 1, wherein a first chamfer (15) is provided at an edge of the supporting part (14) adjacent to the groove (13) and a second chamfer (16) is provided at an edge of the supporting part (14) adjacent to the main body (11).

3. The laminating apparatus according to claim 2, wherein the first chamfer (15) is defined as a chamfer with a circular arc surface, and the second chamfer (16) is inclined at 30° or 45° or 60°.

4. The laminating apparatus according to any one of the previous claims, wherein each of two sides of the flexible pressing mold (40) above the groove (13) is defined by an arc-shaped side (43).

5. The laminating apparatus according to any one of the previous claims, wherein the flexible pressing mold (40) covers a top surface and at least two side surfaces of the backing plate (30), the flexible pressing mold (40) is provided with a pair of extension parts (41) for covering two sides of the backing plate (30), and a bottom end of each of the extension parts (41) extends inward in a horizontal direction and contacts with a bottom of the backing plate (30).

6. The laminating apparatus according to any one of the previous claims, further comprising two blocks (50) arranged between the two side beams (12) and respectively abutting against two sides of the flexible pressing mold (40), wherein the base (10) is provided with a plurality of clamping slots (17) for cooperating with the blocks (50).

7. The laminating apparatus according to claim 6, wherein each of the blocks (50) comprises a bottom plate (51) engaged with the clamping slot (17) and a baffle plate (52) abutting against the flexible pressing mold (40).

8. The laminating apparatus according to claim 7, wherein the baffle plate (52) is connected to a top surface of the bottom plate (51) in a vertical direction; the bottom plate (51) of one of the two blocks (50) has a pair of clamping strips extending downwards from two sides thereof and received in the clamping slots (17) of the base (10), and the bottom plate (51) of the one of the two blocks (50) is provided with a plurality of connecting holes (53) penetrating therethrough; and the bottom plate (51) of the other one of the two blocks (50) is received in the clamping slots (17) of the base (10), and the bottom plate (51) and the baffle plate (52) of the other one of the two blocks (50) are provided with a plurality of connecting holes (53) sequentially penetrating through the baffle plate (52) and the bottom plate (51).

9. The laminating apparatus according to any one of the previous claims, wherein the flexible pressing mold (40) is provided as a silicone pressing mold, a rubber pressing mold, a TPE pressing mold or a PVC pressing mold.

10. The laminating apparatus according to any one of the previous claims, wherein the side beams (12) are higher than the main body (11) in a vertical direction.

11. The laminating apparatus according to any one of the previous claims, wherein the elastic component comprises a plurality of springs (20).

12. The laminating apparatus according to any one of claims 1-10, wherein the elastic component is an elastic rubber.

13. The laminating apparatus according to any one of the previous claims, wherein a bottom of each of the two side beams (12) is flush with a bottom of the main body (11), and when a bottom surface of the main body (11) is rectangular, the two side beams (12) are arranged on two long sides of the main body (11), and a length of each of the two side beams (12) is equal to a length of the main body (11).

14. The laminating apparatus according to claim 13, wherein the groove (13) is disposed on the side beam (12) from a top surface of the side beam (12); or, the side beam (12) comprises a main portion and a protrusion, the protrusion has a width equal to a width of the main portion and a length less than a length of the main portion, and the groove (13) is extending downward from a top surface of the protrusion.

## Patentansprüche

1. Laminiervorrichtung für einen gekrümmten Bildschirm, umfassend eine Basis (10), ein elastisches Bauteil, eine Trägerplatte (30) und eine flexible Pressform (40), wobei:
die Trägerplatte (30) oberhalb der Basis (10) ausgerichtet ist, ein Ende des elastischen Bauteils mit der Trägerplatte (30) verbunden ist, die flexible Pressform (40) die Trägerplatte (30) bedeckt, und die flexible Pressform (40) eine gekrümmte Oberfläche aufweist, die sich von der Basis (10) weg krümmt und an eine Form des gekrümmten Bildschirms angepasst ist; und
die Basis (10) einen Hauptkörper (11) und zwei Seitenträger (12) umfasst, die mit zwei Seiten des Hauptkörpers (11) verbunden sind, wobei jeder der Seitenträger (12) mit einer Nut (13) und einem Stützteil (14) versehen ist, die sich entlang einer Längsrichtung davon erstrecken, und zwei Seiten der flexiblen Pressform (40) sich nach außen erstrecken, um die zwei Stützteile (14) der zwei Seitenträger (12) jeweils zu bedecken, und sich jeweils in die zwei Nuten (13) der zwei Seitenträger (12) erstrecken;
wobei die Laminiervorrichtung ferner eine Stützplattform (70) umfasst, die unterhalb der Basis (10) angeordnet ist, und das elastische Bauteil auf der Stützplattform (70) ausgerichtet ist; und
wobei der Hauptkörper (11) der Basis (10) eine in seiner Mitte angeordnete Öffnung aufweist, ein Ende des elastischen Bauteils mit der Stützplattform (70) verbunden ist und das andere Ende des elastischen Bauteils durch die Öffnung des Hauptkörpers (11) der Basis (10) mit der Trägerplatte (30) verbunden ist.

2. Laminiervorrichtung nach Anspruch 1, wobei eine erste Fase (15) an einer Kante des Stützteils (14) neben der Nut (13) und eine zweite Fase (16) an einer Kante des Stützteils (14) neben dem Hauptkörper (11) vorgesehen ist.

3. Laminiervorrichtung nach Anspruch 2, wobei die erste Fase (15) als eine Fase mit einer kreisbogenförmigen Oberfläche definiert ist und die zweite Fase (16) um 30° oder 45° oder 60° geneigt ist.

4. Laminiervorrichtung nach einem der vorhergehenden Ansprüche, wobei jede der beiden Seiten der flexiblen Pressform (40) oberhalb der Nut (13) durch eine bogenförmige Seite (43) definiert ist.

5. Laminiervorrichtung nach einem der vorhergehenden Ansprüche, wobei die flexible Pressform (40) eine obere Fläche und mindestens zwei Seitenflächen der Trägerplatte (30) bedeckt, die flexible Pressform (40) mit einem Paar von Verlängerungsteilen (41) zum Bedecken von zwei Seiten der Trägerplatte (30) versehen ist und ein unteres Ende jedes der Verlängerungsteile (41) sich in einer horizontalen Richtung nach innen erstreckt und mit der Unterseite der Trägerplatte (30) in Kontakt ist.

6. Laminiervorrichtung nach einem der vorhergehenden Ansprüche, die ferner zwei Blöcke (50) umfasst, die zwischen den beiden Seitenträgern (12) angeordnet sind und jeweils an zwei Seiten der flexiblen Pressform (40) anliegen, wobei die Basis (10) mit einer Vielzahl von Klemmschlitzen (17) zum Zusammenwirken mit den Blöcken (50) versehen ist.

7. Laminiervorrichtung nach Anspruch 6, wobei jeder der Blöcke (50) eine Bodenplatte (51), die mit dem Klemmschlitz (17) in Eingriff ist, und eine Prallplatte (52) umfasst, die an der flexiblen Pressform (40) anliegt.

8. Laminiervorrichtung nach Anspruch 7, wobei die Prallplatte (52) mit einer oberen Fläche der Bodenplatte (51) in vertikaler Richtung verbunden ist; die Bodenplatte (51) eines der beiden Blöcke (50) ein Paar von Klemmstreifen aufweist, die sich von zwei Seiten davon nach unten erstrecken und in den Klemmschlitzen (17) der Basis (10) aufgenommen sind, und die Bodenplatte (51) eines der beiden Blöcke (50) mit einer Vielzahl von Verbindungslöchern (53) versehen ist, die sie durchdringen; und die Bodenplatte (51) des anderen der beiden Blöcke (50) in den Klemmschlitzen (17) der Basis (10) aufgenommen ist, und die Bodenplatte (51) und die Prallplatte (52) des anderen der beiden Blöcke (50) mit einer Vielzahl von Verbindungslöchern (53) versehen sind, die nacheinander durch die Prallplatte (52) und die Bodenplatte (51) hindurchgehen.

9. Laminiervorrichtung nach einem der vorhergehenden Ansprüche, wobei die flexible Pressform (40) als eine Silikonpressform, eine Gummipressform, eine TPE-Pressform oder eine PVC-Pressform vorgesehen ist.

10. Laminiervorrichtung nach einem der vorhergehenden Ansprüche, wobei die Seitenträger (12) in vertikaler Richtung höher sind als der Hauptkörper (11).

11. Laminiervorrichtung nach einem der vorhergehenden Ansprüche, wobei das elastische Bauteil eine Vielzahl von Federn (20) umfasst.

12. Laminiervorrichtung nach einem der Ansprüche 1 bis 10, wobei es sich bei dem elastischen Bauteil um ein elastisches Gummi handelt.

13. Laminiervorrichtung nach einem der vorhergehenden Ansprüche, wobei die Unterseite jedes der beiden Seitenträger (12) mit einer Unterseite des Hauptkörpers (11) bündig ist, und wenn eine Bodenfläche des Hauptkörpers (11) rechteckig ist, die beiden Seitenträger (12) an zwei langen Seiten des Hauptkörpers (11) ausgerichtet sind und eine Länge jedes der beiden Seitenträger (12) gleich einer Länge des Hauptkörpers (11) ist.

14. Laminiervorrichtung nach Anspruch 13, wobei die Nut (13) an dem Seitenträger (12) von einer oberen Fläche des Seitenträgers (12) aus angeordnet ist; oder der Seitenträger (12) einen Hauptabschnitt und einen Vorsprung umfasst, wobei der Vorsprung eine Breite aufweist, die gleich einer Breite des Hauptabschnitts ist, und eine Länge aufweist, die geringer ist als eine Länge des Hauptabschnitts, und die Nut (13) sich von einer oberen Fläche des Vorsprungs nach unten erstreckt.

## Revendications

1. Dispositif de stratification pour écran incurvé, comprenant une base (10), un composant élastique, une plaque de support (30) et un moule de pressage flexible (40), dans lequel :
la plaque de support (30) est agencée au-dessus de la base (10), une extrémité du composant élastique est reliée à la plaque de support (30), le moule de pressage flexible (40) recouvre la plaque de support (30), et le moule de pressage flexible (40) a une surface incurvée s'éloignant de la base (10) et adaptée à la forme de l'écran incurvé, et
la base (10) comprend un corps principal (11) et deux traverses latérales (12) reliées à deux côtés du corps principal (11), chacune des traverses latérales (12) étant pourvue d'une rainure (13) et d'une partie de support (14) s'étendant dans le sens de sa longueur, et deux côtés du moule de pressage flexible (40) s'étendent vers l'extérieur pour recouvrir respectivement les deux parties de support (14) des deux traverses latérales (12) et s'étendent respectivement dans les deux rainures (13) des deux traverses latérales (12),
ledit dispositif de stratification comprenant en outre une plate-forme de support (70) située sous la base (10), et le composant élastique étant agencé sur la plate-forme de support (70), et
ledit corps principal (11) de la base (10) présentant une ouverture disposée au milieu de celui-ci, une extrémité du composant élastique étant reliée à la plate-forme de support (70), et l'autre extrémité du composant élastique étant reliée à la plaque de support (30) à travers l'ouverture du corps principal (11) de la base (10).

2. Dispositif de stratification selon la revendication 1, dans lequel un premier chanfrein (15) est prévu sur un bord de la partie de support (14) adjacent à la rainure (13) et un deuxième chanfrein (16) est prévu sur un bord de la partie de support (14) adjacent au corps principal (11).

3. Dispositif de stratification selon la revendication 2, dans lequel le premier chanfrein (15) est défini sous la forme d'un chanfrein présentant une surface en arc de cercle et le deuxième chanfrein (16) est incliné à 30° ou 45° ou 60°.

4. Dispositif de stratification selon l'une quelconque des revendications précédentes, dans lequel chacun des deux côtés du moule de pressage flexible (40) au-dessus de la rainure (13) est défini par un côté en forme d'arc (43).

5. Dispositif de stratification selon l'une quelconque des revendications précédentes, dans lequel le moule de pressage flexible (40) recouvre une surface supérieure et au moins deux surfaces latérales de la plaque de support (30), le moule de pressage flexible (40) est pourvu d'une paire de parties d'extension (41) destinées à recouvrir deux côtés de la plaque de support (30), et une extrémité inférieure de chacune des parties d'extension (41) s'étend vers l'intérieur dans une direction horizontale et entre en contact avec le dessous de la plaque de support (30).

6. Dispositif de stratification selon l'une quelconque des revendications précédentes, comprenant en outre deux blocs (50) agencés entre les deux traverses latérales (12) et venant respectivement en butée contre deux côtés du moule de pressage flexible (40), ladite base (10) est pourvue d'une pluralité de fentes de serrage (17) destinées à coopérer avec les blocs (50).

7. Dispositif de stratification selon la revendication 6, dans lequel chacun des blocs (50) comprend une plaque inférieure (51) en prise avec la fente de serrage (17) et une plaque déflectrice (52) venant en butée contre le moule de pressage flexible (40).

8. Dispositif de stratification selon la revendication 7, dans lequel la plaque déflectrice (52) est reliée à une surface supérieure de la plaque inférieure (51) dans une direction verticale, la plaque inférieure (51) de l'un des deux blocs (50) présente une paire de bandes de serrage s'étendant vers le bas à partir de deux côtés de celle-ci et reçues dans les fentes de serrage (17) de la base (10), et la plaque inférieure (51) de l'un des deux blocs (50) est pourvue d'une pluralité de trous de liaison (53) pénétrant à travers celui-ci, et la plaque inférieure (51) de l'autre des deux blocs (50) est reçue dans les fentes de serrage (17) de la base (10), et la plaque inférieure (51) et la plaque déflectrice (52) de l'autre des deux blocs (50) sont pourvues d'une pluralité de trous de liaison (53) pénétrant successivement à travers la plaque déflectrice (52) et la plaque inférieure (51).

9. Dispositif de stratification selon l'une quelconque des revendications précédentes, dans lequel le moule de pressage flexible (40) est prévu sous la forme d'un moule de pressage en silicone, d'un moule de pressage en caoutchouc, d'un moule de pressage en TPE ou d'un moule de pressage en PVC.

10. Dispositif de stratification selon l'une quelconque des revendications précédentes, dans lequel les traverses latérales (12) sont plus hautes que le corps principal (11) dans une direction verticale.

11. Dispositif de stratification selon l'une quelconque des revendications précédentes, dans lequel le composant élastique comprend une pluralité de ressorts (20).

12. Dispositif de stratification selon l'une quelconque des revendications 1 à 10, dans lequel le composant élastique est un caoutchouc élastique.

13. Dispositif de stratification selon l'une quelconque des revendications précédentes, dans lequel le dessous de chacune des deux traverses latérales (12) est de niveau avec le dessous du corps principal (11), et lorsqu'une surface inférieure du corps principal (11) est rectangulaire, les deux traverses latérales (12) sont agencées sur deux côtés longs du corps principal (11) et la longueur de chacune des deux traverses latérales (12) est égale à la longueur du corps principal (11).

14. Dispositif de stratification selon la revendication 13, dans lequel la rainure (13) est agencée sur la traverse latérale (12) à partir d'une surface supérieure de la traverse latérale (12), ou la traverse latérale (12) comprend une partie principale et une saillie, la saillie a une largeur égale à la largeur de la partie principale et une longueur inférieure à la longueur de la partie principale, et la rainure (13) s'étend vers le bas à partir d'une surface supérieure de la saillie.
